# EUROPEAN PATENT APPLICATION

(11) **EP 1 273 434 A2**
(43) Date of publication of application: **08.01.2003**
(21) Application number: 02013099.3
(22) Date of filing: 13.06.2002
(51) Int. Cl.: B32B 27/08, B32B 15/08, B44C 5/04

(54) **Curable acrylic coatings for exterior laminate**

(30) Priority: 02.07.2001 US 897529
(71) Applicant: Premark RWP Holdings, Inc., Wilmington, Delaware 19801 (US)
(72) Inventor: Kendall, Eric W., Temple, Texas 76502 (US); Walker, Janice, Fredericksburg, Texas 78624 (US)
(74) Representative: Howden, Christopher Andrew

(57) **Abstract**

The present invention relates to providing a protective acrylic coating to a laminate surface. More particularly, the present invention provides said protective acrylic coating to a laminate surface via a release sheet. The release sheet allows application of a substantially solid acrylic compound to a laminate surface of a laminate assembly. The substantially solid acrylic compound may be cured during thermal and pressure processing of the laminate assembly. Also, the cured acrylic coating protects the laminate surface from fading and from damage.

## Description

### TECHNICAL FIELD

The present invention relates to providing a protective acrylic coating to a laminate surface and more particularly to providing said protective acrylic coating to a laminate surface via a release sheet.

### BACKGROUND

At the present time, polymer related laminates are utilized in a wide range of applications. Polymer related laminate products include decorative laminates. Decorative laminates prepared by heat and pressure consolidation have been produced commercially for a number of years, and have found widespread acceptance in the building and furniture industry as counter and table tops, bathroom and kitchen work surfaces, wall paneling, partitions and doors. Such decorative laminates can be described as containing a number of laminae that are consolidated to form a unitary structure carrying a surface decoration which can range from something as simple as a solid color to something as complex as an embossed simulated wood grain finish.

However, decorative laminates are susceptible to fading due to radiation in the ultraviolet (UV) region of the spectrum. Specifically, UV exposure may cause the decorative properties of such laminates to deteriorate over time. Accordingly, many decorative laminates have either been limited to indoor applications to avoid UV exposure or limited to products that are intended to be useful over a very short life span.

Several approaches have been utilized to adapt laminates to resist UV fading. For example, acrylic emulsion layers have been utilized to ameliorate UV fading. In this approach, a transparent acrylic layer is separately manufactured. The transparent acrylic layer (a thermoplastic film) is placed upon a melamine decorative layer portion. The combination of layers is pressed together to form a laminate product. The transparent acrylic layer provides fade protection while allowing a decorative pattern associated with the melamine decorative layer to be visible. However, the manufacturing constraints associated with pressing cause the transparent acrylic layer to be susceptible to damage. Specifically, thermoplastic layers used in these applications are easily deformed and damaged. If the laminates are subject to wear, scratches may quickly destroy the aesthetic properties of the laminate product.

Another approach to ameliorate UV fading is to include an acrylic material with melamine to form a combined emulsion. The acrylic material is a thermoplastic to facilitate laminate construction from the combined emulsion. In these products, a decorative layer (such as a patterned kraft paper) is treated with the melamine and acrylic emulsion. The treated decorative layer is pressed with a substrate layer and possibly other layers to form a laminate product. This approach does reduce UV fading. However, this approach also gives rise to the susceptibility to damage due to the thermoplastic characteristics of the acrylic material.

In another approach, a pre-manufactured laminate board or a press board is coated with a curable acrylic coating. The acrylic coating is subjected to UV radiation or an electron beam to cure the acrylic coating. The cured acrylic coating is resistant to UV fading and is also resistant to scratches. However, the cured acrylic only facilitates limited aesthetic effects. First, the cured acrylic approach only permits a solid color. Cured acrylic coatings do not permit plate pressing techniques to provide a surface finish. Also, the coating is opaque thereby preventing the use of patterned paper effects. Moreover, this approach may involve substantial expense to implement the curing equipment.

### SUMMARY OF INVENTION

According to a first aspect of the present invention, there is provided a product to provide fade resistant and damage resistant characteristics to a laminate surface, the product comprising:
a release strip element; and
a substantially solid acrylic composition applied to one surface of said release strip element, said substantially solid acrylic composition possessing sufficient viscosity to be retained on said release strip element as a substantially uniform layer and possessing sufficiently low viscosity to facilitate crosslinking by thermal processing to provide said fade resistant and damage resistant characteristics.

According to a second aspect of the present invention, there is provided a product to provide a coating to a laminate surface, the product comprising:
a release strip element operable to apply a substantially solid acrylic composition to a laminate surface to provide said laminate surface with a fade resistant and damage resistant coating; and
said substantially solid acrylic composition comprising acrylic monomers, solid acrylic oligomers, a thermal initiator, and a wetting agent.

Preferably, the releasing strip element comprises one item selected from the list of: a metal foil, a polyurethane, a polyolefin, and a polyester.

According to another aspect of the present invention, there is provided a system for creating a damage resistant and fade resistant laminate structure, the system comprising:
a laminate lay-up arrangement including a substrate layer, decorative layer, and a release sheet layer;
means for applying heat to said laminate lay-up arrangement; and
means for applying pressure to said laminate lay-up arrangement;
wherein said means for applying heat and means for applying pressure are operable to perform laminate consolidation of said laminate lay-up arrangement;
said release sheet layer including a substantially solid acrylic composition disposed against said decorative paper layer, wherein said substantially solid acrylic composition comprises acrylic monomers, solid acrylic oligomers, a thermal initiator, and a wetting agent, and wherein said solid acrylic composition provides a cured coating to said decorative paper layer after application of heat by said means for applying heat.

Preferably, said means for applying heat and said means for applying pressure are incorporated in a press band apparatus.

Advantageously, said decorative layer comprises a melamine resin impregnated and pigment filled cellulose paper.

Conveniently, said substrate layer comprises a phenolic resin impregnated kraft paper.

Preferably, the substantially solid acrylic composition consists essentially of:
75%-90% by weight of an oligomer substance;
8%-20% by weight of a monomer substance;
2%-7% by weight of dicumyl peroxide; and
less than .1% by weight of nonoxynol-12.

Advantageously, the or each oligomer substance is urethane diacrylate.

Conveniently, the or each monomer substance is hexadiol diacrylate.

Preferably, the substantially solid acrylic composition crosslinks during thermal processing in the temperature range of approximately 126.7°C to 165.6°C.

According to a further aspect of the present invention, there is provided a method for applying fade resistant and damage resistant characteristics to a laminate product, the method comprising the steps of:
providing a oligomer and monomer composition, said oligomer and monomer composition possessing sufficient viscosity to be retained on a release sheet as a substantially solid uniform layer and possessing sufficiently low viscosity to facilitate crosslinking;
applying said oligomer and monomer composition to said release sheet;
assembling a laminate assembly including said release sheet and a decorative layer with said oligomer and monomer composition being adjacent to said decorative layer; and
applying thermal processing and pressure to said laminate assembly to concurrently cause said oligomer and monomer composition to crosslink and cause said laminate assembly to cure.

Preferably, monomers of said oligomer and monomer compositions are hexadiol diacrylate.

Advantageously, oligomers of said oligomer and monomer composition are urethane diacrylate.

Conveniently, said step of applying thermal processing and pressure heats said laminate assembly within the temperature range of approximately 126.7 °C to 165.6°C.

Preferably, said oligomer and monomer composition consists essentially of:
75%-90% by weight of an oligomer substance;
8%-20% by weight of a monomer substance;
2%-7% by weight of dicumyl peroxide; and
less than .1% by weight of nonoxynol-12.

The present invention relates to a system and method for providing a protective acrylic coating to a laminate surface. More particularly, the present invention provides said protective acrylic coating to a laminate surface via a release sheet. The release sheet allows application of a substantially solid acrylic compound to a laminate surface of a laminate assembly. The substantially solid acrylic compound may consist of acrylic monomers and oligomers which possess a controlled viscosity utilizing a wetting agent and thermal initiator. The substantially solid acrylic compound may be cured during thermal and pressure processing of the laminate assembly. Also, the cured acrylic coating protects the laminate surface from fading and from damage.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWING

For a more complete understanding of the present invention, reference is now made to the following descriptions taken in conjunction with the accompanying drawing, in which:
FIGURE 1 depicts a release sheet arranged according to the present invention;
FIGURE 2 depicts an exemplary pre-processing laminate assembly; and
FIGURE 3 depicts an exemplary continuous press rolling system to provide a fade resistant and damage resistant coating in accordance with the present invention.

### DETAILED DESCRIPTION

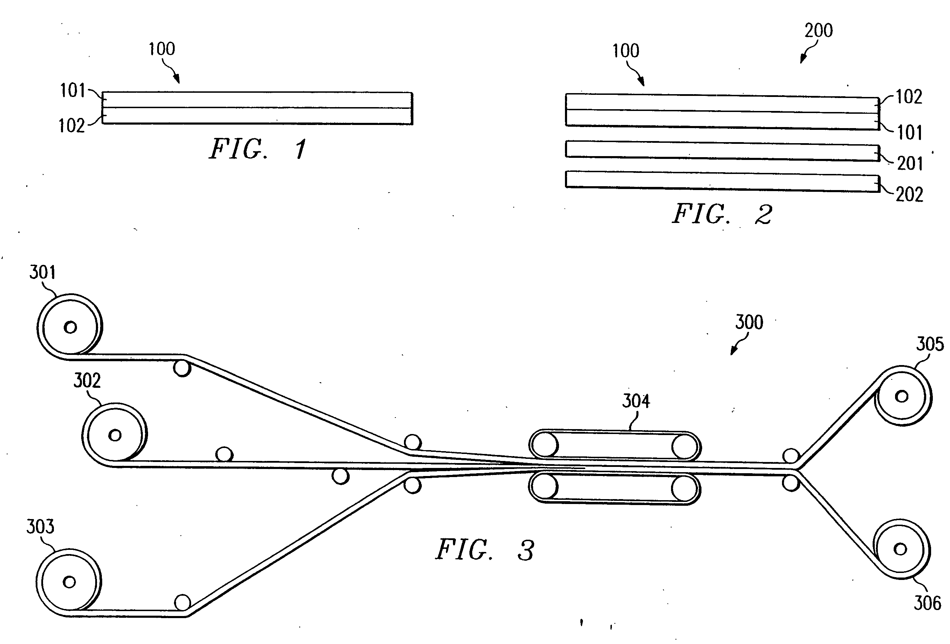

FIGURE 1 depicts a release sheet arranged according to the present invention. Release sheet 100 holds and stabilizes the coating for laminate layup and pressing processes. Release sheet 100 comprises curable coating layer 101 and release paper layer 102. Release paper layer 102 provides a strip element to apply the curable coating layer 101 to a laminate surface while allowing removal of the strip element after curing. Release paper layer 102 need not be constructed from paper. Instead, release paper layer 102 may be constructed utilizing any number of materials as is well known in the art. Suitable materials for use as the release sheet include polyurethane, metallic foil, and polyolefins and polyesters, such as polypropylene, polybutylene, and polyethylene terephthalate.

Curable coating layer 101 provides a curable acrylic mix or formulation that provides fading protection to a decorative layer of a laminate structure and provides substantial resistance to wear and scratching. Moreover, curable coating layer 101 does not require curing by UV exposure or by electron beam radiation. Instead, curable coating layer 101 may be cured by thermal processing. Specifically, curable coating layer 101 may be cured by heating associated with a laminate press structure. Thus, curable coating layer 101 provides a significant advantage over known coating techniques. Specifically, the processing of the end laminate product is greatly reduced, since additional UV exposure or electron beam radiation are not necessary to achieve both fade resistance and damage resistance. Moreover, expensive equipment associated with such steps are not necessary.

It shall be appreciated that known curable acrylic formulations are unsuitable for the present invention. Specifically, known curable acrylic formulations possess a relatively low viscosity and therefore exhibit substantial fluidity. Acrylic formulations utilized in known laminate processing techniques are not capable of being held on release paper. These acrylic formulations are hence not amenable to layup and processing techniques utilizing release paper material. Thus, known acrylic formulations necessarily involve substantially greater expense and complexity in the laminate manufacturing process.

The present invention overcomes the material limitations of known curable acrylic formulations by achieving a delicate balance for the viscosity of the acrylic formulation of curable coating layer 101. Specifically, an acrylic formulation is provided that possesses a sufficiently low viscosity to release from release paper 102 after processing. The viscosity is also sufficiently low so as to flow under lamination heat and pressure associated with laminate construction processing. Additionally, the viscosity is further adapted to facilitate proper crosslinking to achieve the desired scratch resistance. However, the acrylic formulation is adapted to avoid becoming too brittle for efficient handling after the coating is cured on the laminate structure by ensuring that the viscosity does not fall below a minimum threshold. Moreover, the viscosity is kept sufficiently high to allow curable coating layer 101 to be applied and retained as a substantially uniform layer on release paper 102.

Acrylic formulations satisfying the preceding characteristics may be provided as follows. The formulation of a preferred acrylic formulation for curable coating layer 101 begins by utilizing 100% solid acrylic oligomers and monomers without a solvent. Preferred embodiments utilize Ebcryl 284 (aliphatic urethane diacrylate oligomer diluted with 12% 1, 6-hexanediol diacrylate (HDODA) monomer). Preferred embodiments further utilize additional quantities of HDODA to achieve proper viscosity balancing as discussed above.

The solid acrylic material is provided a small amount of a thermal initiator such as dicumyl peroxide. Other thermal initiators may be utilized to the extent that the thermal initiators are consistent with the requisite viscosity requirements. Moreover, a very small amount of wetting agent such as Surfonic N120 (12-mole ethoxylate of nonylphenol) is applied to facilitate application to release paper 102. Surfonic N120 is also known generically as nonoxynol-12. As previously noted, the acrylic compound with the thermal initiator and wetting agent that forms curable coating layer 101 should possess sufficiently low viscosity to release from release paper 102 and to achieve proper crosslinking while possessing sufficiently high viscosity to be retained on release paper 102.

In preferred embodiments, the following materials may be utilized in the respective percent ranges by weight: Ebercryl 284: 75%-90%; hexandiol diacrylate (HDODA): 8%-20%; dicumyl peroxide: 2%-7%; and Surfonic N120: less than .1%. Ebercryl 284 and HDODA are commercially available from UCB Radcure, Inc., Louisville, Kentucky. Dicumyl peroxide is commercially available from Aldrich Chemical Co., Milwaukee, Wisconsin. Surfonic N120 is commercially available from Huntsman Petrochemical Corporation, Houston, Texas.

FIGURE 2 depicts an exemplary pre-processing laminate assembly 200. Preprocessing laminate assembly 200 depicts an exemplary laminate lay-up arrangement. Preprocessing laminate comprises release sheet 100, melamine resin impregnated decorative paper layer 201, and a phenolic resin impregnated kraft layer 202. Melamine resin impregnated decorative paper layer 201 provides a decorative layer for aesthetic purposes to the laminate structure. Decorative paper layer 201 may be constructed utilizing a high quality (approximately 80 to 200 g/m² ream weight) cellulose paper that is pigment filled and impregnated with a water alcohol solution of melamine formaldehyde resin. Decorative paper layer 201, prior to resin impregnation, may be provided a printed pattern such as a solid color or a decorative design such as wood, marble, or leather patterns.

Phenolic resin impregnated kraft layer 202 acts as a substrate layer to provide structure support to the laminate structure. In particular, phenolic resin impregnated kraft layer 202 will impart a degree of strength and rigidity to the final laminate structure. Phenolic resin impregnated kraft layer 202 may be constructed utilizing any number of techniques and/or materials. For example, phenolic resin impregnated kraft layer 202 may be constructed by impregnating a core member with a water alcohol solution of phenol formaldehyde. Examples of suitable core member material include sheets of approximately 145 to 242 g/m² ream weight kraft paper. The impregnated core member may be processed such that the phenolic resin converts to the thermoset state.

Moreover, release sheet 100 is arranged such that curable coating layer 101 is adjacent to melamine decorative paper layer 201. Release sheet 100 is arranged in such a fashion that melamine resin impregnated decorative paper layer 201 will be protected from fading and from damage.

After the various layers are assembled in such an arrangement, pre-processing laminate assembly 200 may be placed between steel plates and concurrently subjected to heat pressure in the range of approximately 5.516 x 10⁶ to 1.103 x 10⁷ pascals for a time sufficient to consolidate the laminate and cure the resins (generally 25 minutes to an hour). The temperature for the processing steps is preferably maintained between 126.7° C and 165.6° C. The pressure may be applied via a mechanical or hydraulic press associated with the steel plates. Additionally, the heat may be supplied by resistive or inductive heating of the steel plates. Alternatively, the steel plates may be heated by conduction by a separate heating apparatus.

Processing causes the resin in the paper sheets to flow, cure, and consolidate into a unitary laminated mass. Moreover, the elevated temperature affects the thermal initiator to thereby cause the acrylic oligomers and monomers to cure. After the unitary laminate structure has been formed, release paper layer 102 is peeled off leaving a fade resistant and damage resistant acrylic barrier for the unitary laminate structure.

It shall be appreciated that more than one laminate structure may be formed at one time by successively repeating the arrangement of layers depicted in FIGURE 2. Each laminate structure formed from the various plurality of layers is separated by removing the release paper layer. Also, the laminate structures may be subsequently bonded to a reinforcing support structure such as plywood hardboard, asbestos board, particle board, and/or the like if desired.

It shall further be appreciated that the present invention is not limited to applications utilizing the laminate structures described herein. The present invention may be employed with any laminate materials or configurations suitable for laminate pressing and thermal processing.

Alternatively, the laminate structure may be constructed utilizing a continuous press rolling system. FIGURE 3 depicts an exemplary continuous press rolling system to provide a fade resistant and damage resistant coating in accordance with the present invention. It shall be appreciated that system 300 is not drawn to scale to aid the reader's comprehension of the various elements of the system. System 300 includes rolls 301, 302, and 303. Roll 301 provides a continuous sheet of release sheet 100. Roll 302 provides a continuous sheet of melamine resin impregnated decorative paper layer 201. Moreover, roll 303 provides a continuous sheet of a phenolic resin impregnated kraft layer 202. The various sheets are unwound by system 300 to provide material input to press bands 304. Press bands 304 provide the requisite pressure and heat to form the unitary laminate structure with the desired cured acrylic coating. After pressure and thermal processing, release paper layer 102 is removed from the unitary laminate structure to be spooled onto roller 305. The cured acrylic coated laminate is then spooled onto roller 306.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

In the present specification "comprises" means "includes or consists of and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A product to provide fade resistant and damage resistant characteristics to a laminate surface, the product comprising:
a release strip element; and
a substantially solid acrylic composition applied to one surface of said release strip element, said substantially solid acrylic composition possessing sufficient viscosity to be retained on said release strip element as a substantially uniform layer and possessing sufficiently low viscosity to facilitate crosslinking by thermal processing to provide said fade resistant and damage resistant characteristics.

2. A product to provide a coating to a laminate surface, the product comprising:
a release strip element operable to apply a substantially solid acryclic composition to a laminate surface to provide said laminate surface with a fade resistant and damage resistant coating; and
said substantially solid acrylic composition comprising acrylic monomers, solid acrylic oligomers, a thermal initiator, and a wetting agent.

3. The product of claim 1 or claim 2 wherein the release strip element comprises one item selected from the list of : a metal foil, a polyurethane, a polyolefin, and a polyester.

4. A system for creating a damage resistant and fade resistant laminate structure, the system comprising:
a laminate lay-up arrangement (200) including a substrate layer (202), decorative layer (201), and a release sheet layer (100);
means for applying heat to said laminate lay-up arrangement (200); and
means for applying pressure to said laminate lay-up arrangement (200);
wherein said means for applying heat and means for applying pressure are operable to perform laminate consolidation of said laminate lay-up arrangement (200);
said release sheet layer (100) including a substantially solid acrylic composition disposed against said decorative paper layer (201), wherein said substantially solid acrylic composition comprises acrylic monomers, solid acrylic oligomers, a thermal initiator, and a wetting agent, and wherein said solid acrylic composition provides a cured coating to said decorative paper layer (201) after application of heat by said means for applying heat.

5. The system of claim 4 wherein said means for applying heat and said means for applying pressure are incorporated in a press band apparatus.

6. The system of claim 4 or 5 wherein said decorative layer comprises a melamine resin impregnated and pigment filled cellulose paper.

7. The system of any one of claims 4, 5 or 6 wherein said substrate layer comprises a phenolic resin impregnated kraft paper.

8. The product or system of any preceding claim, wherein the substantially solid acrylic composition consists essentially of:
75%-90% by weight of an oligomer substance;
8%-20% by weight of a monomer substance;
2%-7% by weight of dicumyl peroxide; and
less than .1% by weight of nonoxynol-12.

9. The product or system of any one of claims 2 to 7, or claim 8 as dependent upon claim 1, wherein the or each oligomer substance is urethane diacrylate.

10. The product or system of any one of claims 2 to 7, or claim 8 as dependent upon claim 1, wherein the or each monomer substance is hexadiol diacrylate.

11. The product or system of any preceding claim wherein the substantially solid acrylic composition crosslinks during thermal processing in the temperature range of approximately 126.7°C to 165.6°C.

12. A method for applying fade resistant and damage resistant characteristics to a laminate product, the method comprising the steps of:
providing a oligomer and monomer composition, said oligomer and monomer composition possessing sufficient viscosity to be retained on a release sheet as a substantially solid uniform layer and possessing sufficiently low viscosity to facilitate crosslinking;
applying said oligomer and monomer composition to said release sheet (100);
assembling a laminate assembly including said release sheet (100) and a decorative layer (201) with said oligomer and monomer composition being adjacent to said decorative layer (201); and
applying thermal processing and pressure to said laminate assembly to concurrently cause said oligomer and monomer composition to crosslink and cause said laminate assembly to cure.

13. The method of claim 12 wherein monomers of said oligomer and monomer composition are hexadiol diacrylate.

14. The method of claim 12 or 13 wherein oligomers of said oligomer and monomer composition are urethane diacrylate.

15. The method of any one of claims 12 to 14 wherein said step of applying thermal processing and pressure heats said laminate assembly within the temperature range of approximately 126.7°C to 165.6°C.

16. The method of any one of claims 12 to 15 wherein said oligomer and monomer composition consists essentially of:
75%-90% by weight of an oligomer substance;
8%-20% by weight of a monomer substance;
2%-7% by weight of dicumyl peroxide; and
less than .1% by weight of nonoxynol-12.
